# EUROPÄISCHE PATENTSCHRIFT

(11) **EP 2 652 199 B1**
(45) Veröffentlichungstag und Bekanntmachung des Hinweises auf die Patenterteilung: **08.10.2014**
(21) Anmeldenummer: 11788899.0
(22) Anmeldetag: 02.12.2011
(51) Int. Cl.: C09D 109/08, C09D 129/04, C09D 131/04, C09D 133/08, D21H 19/44, D21H 19/58, D21H 19/60

(54) **PAPIERSTREICHMASSEN ENTHALTEND EINE KOMBINATION AUS STYROL-BUTADIEN-COPOLYMER UND/ODER STYROL-ACRYLSÄUREESTER-COPOLYMER UND VINYLACETAT-ETHYLEN-COPOLYMER**
PAPER COATING SLIPS COMPRISING A COMBINATION OF STYRENE-BUTADIENE COPOLYMER AND/OR STYRENE-ACRYLIC ESTER COPOLYMER AND VINYL ACETATE-ETHYLENE COPOLYMER
COMPOSITIONS DE COUCHAGE POUR PAPIER CONTENANT UNE COMBINAISON DE COPOLYMÈRE DE STYRÈNE-BUTADIÈNE ET/OU DE COPOLYMÈRE DE STYRÈNE-ESTER D'ACIDE ACRYLIQUE ET COPOLYMÈRE D'ACÉTATE DE VINYLE-ÉTHYLÈNE

(30) Priorität: 17.12.2010 DE 102010063470
(43) Veröffentlichungstag der Anmeldung: 23.10.2013
(73) Patentinhaber: Wacker Chemie AG, 81737 München (DE)
(72) Erfinder: FICKERT, Karl Ernst, 84503 Altötting (DE); WEITZEL, Hans-Peter, 84571 Reischach (DE)
(74) Vertreter: Schuderer, Michael
(86) Internationale Anmeldenummer: PCT/EP2011/071637
(87) Internationale Veröffentlichungsnummer: WO 2012/080007

(56) Entgegenhaltungen:
- EP-A1- 0 253 285
- EP-A1- 0 632 096
- EP-A1- 1 323 752
- EP-A1- 1 352 915
- WO-A1-94/00514
- DE-A1-102009 001 498
- DE-B3-102004 028 431

## Beschreibung

Die Erfindung betrifft Papierstreichmassen enthaltend als Bindemittel eine Kombination aus Styrol-Butadien-Copolymer und/ oder Styrol-Acrylsäureester-Copolymer mit einem mit Polyvinylalkohol stabilisierten Vinylacetat-Ethylen-Copolymer.

Eine der wichtigsten Aufgaben von Papier und Karton ist deren Funktion als Druckträger. Fasrige Substrate wie Papier verfügen allerdings über eine relativ raue Oberfläche. Um deren Bedruckbarkeit, aber auch deren Qualität bezüglich Glätte, Glanz und insbesondere Weisse zu verbessern, werden Papiere mit Papierstreichmassen beschichtet. Wässrige Papierstreichmassen enthalten im wesentlichen Pigmente, synthetische Bindemittel, weitere Hilfsstoffe und Wasser. Als Bindemittel für Papierstreichmassen haben sich insbesondere Copolymere auf Basis von Styrol und Butadien (SBR) und auf Basis von Styrol und Acrylsäureester durchgesetzt. Papierstreichfarben mit SBR-Copolymeren werden beispielsweise in der EP 666274 A2 beschrieben. Papierstreichmassen mit Styrol-Butadien-Copolymeren und/oder Styrol-Acrylsäureester-Copolymeren sind aus der US 2005/0089643 bekannt.

Nachteilig bei der Verwendung von Styrol-Butadien-Copolymeren als Bindemittel in Papierstreichmassen sind unter anderem allerdings deren Neigung zur UV-Vergilbung, Schwächen in der Verklebbarkeit damit beschichteter Papiere und Kartons, zu geringe Strichporosität des gestrichenen Druckträgers, fehlende Trägerfunktion für optische Aufheller und geruchsstörende Nebenprodukte im Copolymerisat. Nachteilig bei der Verwendung von Styrol-Acrylat-Copolymeren als Bindemittel in Papierstreichmassen sind u.a. nicht ausreichende Nassrupffestigkeit der mit solchen Styrol-Acrylat-Copolymeren hergestellten gestrichenen Trägermaterialien (Papier, Karton) und die fehlende Trägerfunktion für optische Aufheller.

Zur Verbesserung der Bedruckbarkeit von mit Beschichtungsmitteln, welche Styrol-Butadien-Copolymere als Bindemittel enthalten, beschichteten Papieren wird in der US 2005/0089643 A1 vorgeschlagen die Styrol-Butadien-Copolymere in Kombination mit Styrol-Acrylat-Copolymeren zu verwenden.

In der DE-OS 2107287 wird vorgeschlagen emulgatorstabilisierte Vinylacetat-Ethylen-Copolymerisate (VAE) als Bindemittel in Papierbeschichtungsmitteln einzusetzen und zur Verbesserung des Pigmentbindevermögens zusätzlich Polyalkylenoxid-Verbindungen zu verwenden. In der EP 316090 B1 wird vorgeschlagen die Bindekraft von emulgatorstabilisierten Vinylacetat-Copolymeren in Papierbeschichtungen mittels der Verwendung einer speziellen Emulgatorkombination bei deren Herstellung zu verbessern. Aus der US 6153288 ist bekannt die Binderqualität von Vinylacetat-Ethylen-Copolymeren in Papierbeschichtungen mittels der Kombination mit kationischen Polymeren zu erhöhen. Aus der DE 3622820 A1 ist bekannt, Polyvinylalkohole als Trägermaterial für optische Aufheller in Streichmassen einzusetzen.

Vor diesem Hintergrund bestand die Aufgabe, Papierbeschichtungsmittel die als Bindemittel Styrol-Butadien-Copolymerisate und/oder Styrol-Acrylsäureester-Copolymerisate enthalten, hinsichtlich deren oben beschriebenen Nachteile wie Neigung zur UV-Vergilbung, Schwächen in der Verklebbarkeit damit beschichteter Papiere, zu geringe Strichporosität und insbesondere die Weisse der gestrichenen Druckträger zu verbessern.

Überraschenderweise ist dies mittels der Kombination mit Bindemittel auf der Basis von mit Polyvinylalkohol stabilisierten Vinylacetat-Ethylen-Copolymerisaten gelungen, ohne dabei den zu erwartenden Verlust an Bindekraft aufgrund des VAE-Anteils, zu erhalten. Mit Polyvinylalkohol stabilisierte Vinylacetat-Ethylen-Copolymere wurden bisher nicht als Bestandteil von Papierstreichmassen eingesetzt.

Gegenstand der Erfindung sind Papierstreichmassen enthaltend als Bindemittel eine wässrige Dispersion eines Styrol-Butadien-Copolymers oder eines Styrol-Acrylsäureester-Copolymers, oder ein Gemisch dieser wässrigen Dispersionen, dadurch gekennzeichnet, dass zusätzlich jeweils eine wässrige Dispersion eines mit Polyvinylalkohol stabilisierten Vinylacetat-Ethylen-Copolymers enthalten ist.

Geeignete wässrige Dispersionen von Styrol-Butadien-Copolymeren und Verfahren zu deren Herstellung sind dem Fachmann bekannt, beispielsweise aus der EP 666274 A2. Solche Dispersionen sind auch im Handel erhältlich. Die Copolymere enthalten im Allgemeinen 50 bis 80 Gew.-% Styrol, 20 bis 50 Gew.-% Butadien und 0 bis 10 Gew.-% ein oder mehrere ethylenisch ungesättigte, funktionelle Comonomere, wobei sich die Angaben in Gew.-% jeweils auf 100 Gew.-% aufaddieren.

Geeignete wässrige Dispersionen von Styrol-Acrylsäureester-Copolymeren und Verfahren zu deren Herstellung sind dem Fachmann bekannt. Die Copolymere enthalten im Allgemeinen 50 bis 80 Gew.-% Styrol, 20 bis 50 Gew.-% ein oder mehrere Acrylsäureester von Alkoholen mit 1 bis 18 C-Atomen, vorzugsweise Methylacrylat, Ethylacrylat, Propylacrylat, Butylacrylat, 2-Ethylhexylacrylat, gegebenenfalls im Gemisch mit Methacrylsäureester wie Methylmethacrylat, und 0 bis 10 Gew.-% ein oder mehrere ethylenisch ungesättigte, funktionelle Comonomere, wobei sich die Angaben in Gew.-% jeweils auf 100 Gew.-% aufaddieren.

Beispiele für ethylenisch ungesättigte, funktionelle Comonomere sind ethylenisch ungesättigte Carbonsäuren oder deren Salze, wie Acrylsäure oder Methacrylsäure, ethylenisch ungesättigte Sulfonsäuren oder deren Salze wie Vinylsulfonat, ethylenisch ungesättigte Carbonsäureamide wie Acrylamid oder Methacrylamid und ethylenisch ungesättigte Nitrile wie Acrylnitril. Der Festgehalt der wässrigen Dispersionen von Styrol-Butadien-Copolymeren oder Styrol-Acrylsäureester-Copolymeren beträgt im Allgemeinen 40 bis 70 Gew.-%.

Die Herstellung der wässrigen Styrol-Butadien-Copolymer-Dispersionen oder der Styrol-Acrylsäureester-Copolymer-Dispersionen erfolgt in bekannter Weise mittels radikalisch initiierter Emulsionspolymerisation in Gegenwart von Radikalinitiatoren und Emulgatoren und gegebenenfalls weiteren Hilfsstoffen wie Polymerisationsregler. Geeignete Styrol-Butadien-Copolymer-Dispersionen und Styrol-Acrylsäureester-Copolymer-Dispersionen sind im Handel erhältlich.

Geeignete wässrige Dispersionen von mit Polyvinylalkohol stabilisierten Vinylacetat-Ethylen-Copolymeren und Verfahren zu deren Herstellung sind dem Fachmann bekannt, beispielsweise aus der EP 1352915 B1. Solche Dispersionen sind im Handel erhältlich.

Die Vinylacetat-Ethylen-Copolymere enthalten im Allgemeinen 1 bis 40 Gew.-%, vorzugsweise 5 bis 30 Gew.-% Ethylen, 40 bis 99 Gew.-% Vinylacetat, 0 bis 50 Gew.-% weitere Comonomere aus der Gruppe der Vinylester und (Meth)acrylsäureester, 0 bis 5 Gew.-% ethylenisch ungesättigte funktionelle Comonomere, wobei sich die Angaben in Gew.-% jeweils auf 100 Gew.-% aufaddieren.

Geeignete weitere Vinylester sind solche von Carbonsäuren mit 3 bis 12 C-Atomen wie Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Hexion). Geeignete Methacrylsäureester oder Acrylsäureester sind Ester von unverzweigten oder verzweigten Alkoholen mit 1 bis 18 C-Atomen wie Methylacrylat, Methylmethacrylat, n-Butylacrylat und 2-Ethylhexylacrylat.

Beispiele für ethylenisch ungesättigte, funktionelle Comonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat oder Triallylcyanurat, oder nachvernetzende Comonomere, beispielsweise N-Methylolacrylamid (NMA). Geeignet sind auch epoxidfunktionelle Comonomere wie Glycidylmethacrylat. Weitere Beispiele sind siliciumfunktionelle Comonomere, wie Methacryloxypropyltri(alkoxy)-Silane, Vinyltrialkoxysilane und Vinylmethyldialkoxysilane, wobei als Alkoxygruppen beispielsweise Methoxy-, Ethoxy-Reste enthalten sein können.

Bevorzugt werden Copolymere von Vinylacetat mit 1 bis 40 Gew.-% Ethylen; sowie
Copolymere von Vinylacetat mit 1 bis 40 Gew.-% Ethylen und 1 bis 50 Gew.-% von einem oder mehreren weiteren Comonomeren aus der Gruppe Vinylester mit 3 bis 12 C-Atomen im Carbonsäurerest wie Vinylpropionat, Vinyllaurat, Vinylester von alpha-verzweigten Carbonsäuren mit 9 bis 11 C-Atomen wie VeoVa9, VeoVa10, VeoVa11; und
Copolymere von Vinylacetat, 1 bis 40 Gew.-% Ethylen und vorzugsweise 1 bis 50 Gew.-% (Meth)Acrylsäureester von unverzweigten oder verzweigten Alkoholen mit 1 bis 18 C-Atomen; wobei die Copolymere noch die genannten funktionellen Comonomere in den genannten Mengen enthalten können, und wobei sich die Angaben in Gew.-% auf jeweils 100 Gew.-% aufaddieren.

Die Herstellung der mit Polyvinylalkohol stabilisierten Vinylacetat-Ethylen-Copolymere erfolgt nach dem Emulsionspolymerisationsverfahren, wobei die Polymerisationstemperatur im allgemeinen 60°C bis 90°C beträgt. Die Initiierung der Polymerisation erfolgt mit den für die Emulsionspolymerisation gebräuchlichen Initiatoren. Zur Steuerung des Molekulargewichts können während der Polymerisation regelnde Substanzen eingesetzt werden.

Der Polyvinylalkohol-Anteil wird vorzugsweise vor oder während der Emulsionspolymerisation zugegeben und stabilisiert die entstehende Dispersion. Vorzugsweise wird teilverseifter Polyvinylalkohol als Schutzkolloid eingesetzt. Besonders bevorzugt sind teilverseifte Polyvinylalkohole mit einem Hydrolysegrad von 80 bis 95 Mol-% und einer Höpplerviskosität, in 4 %-iger wässriger Lösung von 4 bis 30 mPas (Methode nach Höppler bei 20°C, DIN 53015). Am meisten bevorzugt werden Polyvinylalkohole mit einem Hydrolysegrad von 85 bis 90 Mol-% und einer Höpplerviskosität, in 4 %-iger wässriger Lösung von 4 bis 30 mPas (Methode nach Höppler bei 20°C, DIN 53015). Die genannten Schutzkolloide sind im Handel erhältlich bzw. mittels dem Fachmann bekannter Verfahren zugänglich.

Die Polyvinylalkohole werden im allgemeinen in einer Menge von insgesamt 1 bis 20 Gew.-%, bezogen auf das Gesamtgewicht der Monomere, bei der Polymerisation zugesetzt. Die Vinylacetat-Ethylen-Copolymer-Dispersionen enthalten im Allgemeinen 1 bis 20 Gew.-% Polyvinylalkohol, vorzugsweise 5 bis 10 Gew.-%, jeweils bezogen auf Vinylacetat-Ethylen-Copolymer. Der Festgehalt der Dispersionen beträgt im Allgemeinen 30 bis 70 Gew.-%, vorzugsweise 50 bis 65 Gew.-%.

Gegebenenfalls können in der wässrigen Dispersion des Vinylacetat-Ethylen-Copolymers neben Polyvinylalkohol noch weitere Schutzkolloide enthalten sein. Beispiele hierfür sind Polysaccharide wie Stärken oder Dextrine, Cellulosen und Celluloseether, synthetische Polymere wie Poly(meth)acrylsäure. Vorzugsweise enthält die wässrige Dispersion des Vinylacetat-Ethylen-Copolymers keinen Emulgator.

Vorzugsweise enthalten die Papierstreichmassen mindestens eine wässrige Dispersion eines Styrol-Butadien-Copolymers, oder mindestens eine wässrige Dispersion eines Styrol-Acrylsäureester-Copolymers, oder ein Gemisch aus mindestens einer wässrigen Dispersion eines Styrol-Butadien-Copolymers und aus mindestens einer wässrigen Dispersion eines Styrol-Acrylsäureester-Copolymers, jeweils in Kombination mit mindestens einer wässrigen Dispersion eines mit Polyvinylalkohol stabilisierten Vinylacetat-Ethylen-Copolymers, vorzugsweise in einem Gewichtsverhältnis der Styrol-haltigen Copolymeren zu dem Vinylacetat-Ethylen-Copolymeren von jeweils 50 : 50 bis 95 : 5, vorzugsweise 75 : 25 bis 95 : 5 (fest/fest).

Die Rezepturen von Papierstreichmassen sind bekannt. Der Anteil der Rezepturbestandteile in Papierstreichmassen wird im Folgenden auf den Pigmentanteil bezogen. Geeignete Pigmente sind beispielsweise Tone, Calciumcarbonat, Titanoxid. Bevorzugt werden Kaolin und/oder Calciumcarbonat. Der Bindemittelanteil, das heißt im vorliegenden Fall der Anteil an dem Gemisch aus wässriger Dispersion eines Styrol-Butadien-Copolymers und/oder eines Styrol-Acrylsäureester-Copolymers, und wässriger Dispersion eines mit Polyvinylalkohol stabilisierten Vinylacetat-Ethylen-Copolymers beträgt im Allgemeinen 7 bis 20 Gewichsteile (fest) bezogen auf 100 Gewichtsteile Pigment (fest).

Weitere Bestandteile der Rezeptur sind weitere Zusatzstoffe aus der Gruppe der Dispergiermittel wie Natriumpolyacrylate, der Gleitmittel wie Fettsäuresalze (z.B. Stearate), der optischen Aufheller wie Diaminostilbendisulfonsäurederivate, Cobinder, Entschäumer, Konservierungsmittel und Wasser. Zur Herstellung der Papierstreichmassen werden der Pigmentanteil, im Allgemeinen als wässriger Pigmentslurry, der Bindemittelanteil sowie die weiteren Zusatzstoffe in dem Fachmann bekannter Weise mit Wasser gemischt.

Das Aufbringen der Papierstreichmasse auf die jeweiligen Träger erfolgt mit den dafür üblichen Beschichtungsvorrichtungen wie beispielsweise Rakelstreichanlagen, Walzenstreichanlagen und Schaberstreichanlagen. Geeignete Trägermaterialien sind Papier und Karton.

Die erfindungsgemäß ausgestatteten Papierstreichmassen werden vorzugsweise zur Herstellung von gestrichenen graphischen Papieren oder gestrichenen, graphischen Karton verwendet.

Die Vorteile der vorliegenden Erfindung werden in den folgenden Beispielen und Prüfungen erläutert, ohne dass diese eine Einschränkung darstellen.

### Beispiel 1:

### Herstellung der mit Polyvinylalkohol stabilisierten Vinylacetat-Ethylen-Copolymer-Dispersion:

In einem Druckreaktor wurden 95,5 kg eines Polyvinylalkohols (20 %-ige Lösung in Wasser), mit einer Viskosität nach Höppler in einer 4 Gew.-%-igen Lösung von 4 mPas, und einem Hydrolysegrad von 88 Mol-%, vorgelegt. Zusätzlich wurden 224 kg Vinylacetat und 101,5 kg entionisiertes Wasser vorgelegt. Der Reaktor wurde auf einen Druck von 21 bar und eine Temperatur von 55°C gebracht (entsprechend einer Ethylenmenge von 18,5 kg) und die Polymerisation durch Start der Initiatordosierungen tert.-Butylhydroporoxid (3 Gew.-% in Wasser) und Ascorbinsäure (5 Gew.-% in Wasser) mit je 750 g/h gestartet. Bei Reaktionsbeginn, erkennbar an einem Temperaturanstieg, wurde die Reaktionstemperatur mit Hilfe der freiwerdenden Polymerisationswärme auf 90°C und der Druck auf 44 bar angehoben. Die Initiatordosierungen wurden auf je 350 g/h reduziert. 45 Minuten nach Reaktionsbeginn wurden weitere Dosierungen gestartet: 40 kg/h Vinylacetat für eine Dauer von 90 Minuten (entsprechend 60 kg Vinylacetat) und 22 kg/h einer 10,6 Gew.-%-igen wässrigen Polyvinylalkohollösung, mit einer Viskosität nach Höppler in einer 4 Gew.-%-igen Lösung von 4 mPas, und einem Hydrolysegrad von 88 Mol-%, für eine Dauer von 120 Minuten (entsprechend einer Menge von 44 kg). Ethylen wurde bei einem Solldruck von 44 bar nachdosiert bis zu einer Gesamtethylenmenge von 34 kg. Nach Ende der Dosierungen wurden die Initiatordosierungen noch 30 Minuten mit 1300 g/h nachdosiert, wobei der Druck auf 20 bar abfiel. Anschließend wurde der Ansatz auf 65°C abgekühlt und in einen Drucklosreaktor überführt und dort bei einem Druck von 700 mbar durch Zugabe von 1 kg Tert-Butylhydroperoxid (10 Gew.-% in Wasser) und 2 kg Ascorbinsäure (5 Gew.-% in Wasser) nachpolymerisiert. Die fertige Dispersion wurde über ein Sieb mit einer Maschenweite von 65 µm filtriert und abgefüllt.

Die erhaltene Dispersion hatte einen Feststoffgehalt von 60,3 Gew.-%, eine Viskosität von 2850 mPas (Brookfield, 20, 23°C), eine Glasübergangstemperatur von 15,0°C. Der Mittelwert der gewichtsmittleren Partikelgrößenverteilung Dw der Dispersion lag bei 1050 nm (Spezifische Oberfläche: 6,3 m²/g).

Die in den folgenden Ausprüfungen verwendeten Streichmassenrezepturen enthielten folgende Materialien:

| Produkt | Beschreibung | Hersteller |
|---|---|---|
| Hydrocarb 90 | Pigment: Calciumcarbonat, 90 % < 2 µm | Omya, Köln |
| Camcoat 80 | Pigment: Streichkaolin, 80 % < 2 µm | AKW, Hirschau |
| Sterocoll FS | Alkalischer Acrylatcopolymer-Verdicker | BASF |
| Litex P 7110 | Styrol-Butadien-Copolymer-Dispersion | Polymer Latex |
| Primal P-308M | Styrol-Acrylsäureester-Copolymer-Dispersion | Rohm+Haas |
| Tinopal ABP-Z | Tetrasulfo-Aufheller (Stilbenderivat) | BASF |
| Optiblanc NL | Disulfo-Aufheller (Stilbenderivat) | 3-Sigma |
| VAE-Dispersion | Dispersion aus Beispiel 1 | Wacker Chemie |

Zur Herstellung der Streichmasse wurden die Bestandteile der Rezeptur mit einem Laborrührer vermischt und durch Verdünnen mit Wasser auf den jeweiligen Festgehalt eingestellt. Anschließend wurde die Viskosität der Streichmassen mit einem Brookfield-Viskosimeter (Spindel 4, 100 Upm, 20°C) bestimmt.

Zur Ausprüfung wurde die Streichmasse auf das jeweilige Trägermaterial aufgetragen.

Es wurde zum einen Glasfaserpapier mit einem Flächengewicht von 75 g/m² (Ref.Nr. 10370050 der Fa. Schleicher&Schüll) eingesetzt. Die Auftragung erfolgte mit einem 30µm-Filmziehkastenrakel; das Strichgewicht betrug 15 g/m².

Zusätzlich wurde auch auf Duplexkarton getestet (Chromoduplexkarton, Flächengewicht 350 g/m²). Die Auftragung erfolgte dabei mit einem 20µm-Filmziehkastenrakel; das Strichgewicht betrug 20 g/m².

Die zur Austestung bestimmten Prüfparameter, die dabei angewandten Meßmethoden und Prüfgeräte sind im Folgenden zusammengestellt:

| Prüfparameter | Norm/Meßmethode | Prüfgerät |
|---|---|---|
| Viskosität | Spindel 4, 100 Upm | Brookfieldviskosimeter |
| Weißgrad R 457 | Tappi, Filter R457 | Elrephomat 450X, Lichtart D65 |
| CIE-Weiße | ISO 2470 | Elrephomat 450X, Lichtart D65 |
| Gelbwert nach UV-Vergilbung | DIN 5033 Teil 2,3,7 | Elrephomat 450X, Lichtart D65 |
| Farbwegschlagtest | Prüfbau | Prüfbau-Mehrzweckprobedruckmaschine |
| Farbdichtemessung | ISO 13656 | Spektralphotometer X-rite, SpectroEye |
| UV-Vergilbung | - | UV-A-Lampe mit 351 nm in Anlehnung an DIN 6167 |

Bestimmung der Viskosität von erfindungsgemäß modifizierten Streichmassen mit einer Styrol-Butadien-Dispersion und einer VAE-Dispersion

Die Streichmassen wurden mit dem in der Tabelle 1 jeweils angegebenen Strichrezept hergestellt. Der Feststoffgehalt der Streichmassen wurde derart gewählt, dass im Vergleichsbeispiel (Stand der Technik) ohne optischen Aufheller eine Viskosität nach Brookfield bei 100 UpM und 20°C von ca. 1100 mPa.s erreicht wurde, was einer gängigen Praxisstreichmasse für die Verarbeitung auf einem Schaberstreichaggregat entspricht. Die dazugehörigen Messergebnisse sind ebenfalls in Tabelle 1 zusammengefasst.

**Tabelle 1: Viskosität der modifizierten Streichmassen**

| **Strichrezept** | **Angaben in Gewichtsteilen fest** | | | | | |
|---|---|---|---|---|---|---|
| | Vergleich | + VAE | Vergleich | + VAE | Vergleich | + VAE |
| Hydrocarb 90 | 80 | 80 | 80 | 80 | 80 | 80 |
| Camcoat 80 | 20 | 20 | 20 | 20 | 20 | 20 |
| Sterocoll FS | 0,13 | 0,13 | 0,13 | 0,13 | 0,13 | 0,13 |
| Litex P 7110 | 14 | 10,5 | 14 | 10,5 | 14 | 10,5 |
| VAE-Dispersion | | 3,5 | | 3,5 | | 3,5 |
| Tinopal ABP-Z | | | 1 | 1 | | |
| Optiblanc NL | | | | | 1 | 1 |

| **Prüfparameter** | **Streichfarbenwerte** | | | | | |
|---|---|---|---|---|---|---|
| Festgehalt Gew.% | 65 | 65 | 65 | 65 | 65 | 65 |
| Viskosität mPa.s | 1050 | 820 | 1116 | 490 | 910 | 560 |
| | | | | | | |
| Festgehalt Gew.% | | | | 70 * | | 69 * |
| Viskosität mPa.s | | | | 1100 | | 990 |

Überraschenderweise konnte festgestellt werden, dass Streichmassen, welche neben der SBR-Dispersion noch die erfindungsgemäßen Anteile an VAE-Dispersion enthalten, im Vergleich zur Streichmasse ohne einen Anteil VAE-Dispersion, eine wesentlich niedrigere Viskosität bei vergleichbarem Feststoffgehalt aufweisen. Dieser Effekt ist noch ausgeprägter, wenn optische Aufheller in der Streichmassenrezeptur enthalten sind. Die niedrigere Viskosität ist offensichtlich nicht vom Aufhellertyp (Disulfo/Optiblanc NL oder Tetrasulfo/Tinopal ABP-Z), abhängig. Dies ermöglicht in Streichmassen, welche die erfindungsgemäße Kombination plus einen optischen Aufheller enthalten, einen erheblichen Anstieg des Feststoffgehalts (weniger Wasserzugabe erforderlich, siehe **(*)** vorletzte und letzte Zeile in Tabelle 1). Dies führt zu potentiell höheren Maschinengeschwindigkeiten, da weniger Wasser in der Streichmasse getrocknet werden muss, sowie zu besseren Strichwerten, da die Streichmasse während des Auftrags weniger ins Rohmaterial penetriert, was zu einem besseren "Strich holdout" führt, was wiederum in einer Verbesserung der Stricheigenschaften und letztendlich besseren Druckbildwiedergabe resultiert. Nimmt man die Viskosität der jeweiligen Vergleichsstreichmassen ohne die erfindungsgemäße Kombination zum Maßstab, so zeigt die Tabelle 1, dass im gewählten Streichmassenrezept mit der erfindungsgemäßen Kombination Feststoffgehaltsanstiege von 4 - 5 %-Punkten bei vergleichbarer Viskosität möglich sind.

Bestimmung der Viskosität von erfindungsgemäß modifizierten Streichmassen mit einer Styrol-Acrylsäureester-Copolymer-Dispersion und einer VAE-Dispersion

Die Streichmassen wurden mit dem in der Tabelle 1a jeweils angegebenen Strichrezept hergestellt. Der Feststoffgehalt der Streichmassen wurde derart gewählt, dass im Vergleichsbeispiel (Stand der Technik) ohne optische Aufheller eine Viskosität nach Brookfield bei 100 UpM und 20°C von ca. 800 mPa.s erreicht wurde, was einer gängigen Praxisstreichmasse für die Verarbeitung auf einem Rakelstreichaggregat entspricht. Die dazugehörigen Messergebnisse sind ebenfalls in Tabelle 1a zusammengefasst.

**Tabelle 1a: Viskosität der modifizierten Streichmassen**

| **Strichrezept** | **Angaben in Gewichtsteilen fest** | | | |
|---|---|---|---|---|
| | Vergleich | + VAE | Vergleich | + VAE |
| Hydrocarb 90 | 80 | 80 | 80 | 80 |
| Camcoat 80 | 20 | 20 | 20 | 20 |
| Sterocoll FS | 0,13 | 0,13 | 0,13 | 0,13 |
| Primal P-308M | 14 | 10,5 | 14 | 10,5 |
| VAE-Dispersion | | 3,5 | | 3,5 |
| Tinopal ABP-Z | | | 1 | 1 |

| **Prüfparameter** | **Streichfarbenwerte** | | | |
|---|---|---|---|---|
| Festgehalt Gew.% | 68 | 68 | 68 | 68 |
| Viskosität mPa.s | 810 | 790 | 1004 | 590 |

Es konnte festgestellt werden, dass Streichmassen, welche neben dem Styrol-Acrylsäureester-Copolymer noch die erfindungsgemäßen Anteile an VAE-Dispersion enthalten, im Vergleich zur Streichmasse ohne einen Anteil VAE-Dispersion eine vergleichbare Viskosität bei vergleichbarem Feststoffgehalt aufweisen. Gibt man jedoch beiden Streichmassen optischen Aufheller hinzu, so zeigt die Streichmasse mit den erfindungsgemäßen Anteilen an VAE-Dispersion eine wesentlich niedrigere Viskosität bei vergleichbarem Feststoffgehalt. Dies eröffnet wiederum eine mögliche Feststoffgehaltserhöhung, verbunden mit den Vorteilen wie sie im Beispiel der Tabelle 1 beschrieben wurden.

Bestimmung der Strichreflexionswerte von mit den erfindungsgemäß modifizierten Streichmassen, mit einer Styrol-Butadien-Dispersion und VAE-Dispersion, hergestellten gestrichenen Trägermaterialien:
Die Streichmassen wurden mit dem in der Tabelle 2 jeweils angegebenen Strichrezept mit einem Feststoffgehalt von 65 Gew.-% hergestellt, auf Glasfaserpapier mittels 30µm-Filmziehkastenrakel aufgetragen, was einer Strichdicke von 10 - 12 µm entsprach, und bei 100°C im Umlufttrockenschrank eine Minute lang getrocknet. Als Trägermaterial für die Streichmassen wurde bewusst neutrales Glasfaserpapier verwendet, um jeglichen Rohpapier-/Rohkartoneinfluß wie z.B. den eines optischen Aufhellers auf die Messergebnisse ausschließen zu können. An den so erhaltenen Strichmustern wurden die in der Papierindustrie üblichen Reflexionswerte Weißgrad R457 und CIE-Weißgrad gemessen. Die Rezepturen und die dazu gehörigen Messergebnisse sind in Tabelle 2 zusammengefasst.

**Tabelle 2: Strichreflexionswerte**

| **Strichrezept** | **Angaben in Gewichtsteilen fest** | | |
|---|---|---|---|
| | Vergleich | + VAE | + VAE |
| Hydrocarb 90 | 80 | 80 | 80 |
| Camcoat 80 | 20 | 20 | 20 |
| Sterocoll FS | 0,13 | 0,13 | 0,13 |
| Litex P7110 | 14 | 10,5 | 7 |
| VAE-Dispersion | | 3,5 | 7 |
| Tinopal ABP-Z | 1 | 1 | 1 |

| **Prüfparameter** | **Reflexionswerte** | | |
|---|---|---|---|
| Weißgrad R 457 % | 90,2 | 95,1 | 98,6 |
| Erhöhung Weißgrad R 457 | | + 5,4 % | + 9,3 % |
| CIE-Weiße | 81,2 | 96,7 | 107,1 |
| Erhöhung CIE-Weiße | | + 19 % | + 32 % |

Die Striche mit steigendem Anteil der VAE-Dispersion zeigten gegenüber dem Vergleichsstrich nur mit dem Binder auf Basis Styrol-Butadien, einen signifikanten Anstieg in den praxisrelevanten Reflexionsparametern Weißgrad R457 und CIE-Weiße. In der Praxis versteht man unter Signifikanz bei den R457-Werten eine Abweichung um ± 1 Weißgradprozentpunkt, bei den CIE-Werten um ± 3 CIE-Weissepunkte.
In Prozenten ausgedrückt ist je nach Anteil VAE-Dispersion eine Steigerung bis zu 9,3 % in den Weißgrad-Werten bzw. bis zu 31 % bei den CIE-Werten erreichbar.
Die Erhöhung in den Reflexionswerten ist auf den jeweiligen Anteil der erfindungsgemäßen VAE-Dispersion im Strich mit ihrem Schutzkolloidsystem auf Basis von Polyvinylalkohol zurückzuführen, welcher als Akzeptor für den optischen Aufheller wirkt.

Bestimmung der Strichreflexionswerte von mit den erfindungsgemäß modifizierten Streichmassen, mit einer Styrol-Acrylsäureester-Copolymer-Dispersion und VAE-Dispersion, hergestellten gestrichenen Trägermaterialien:
Die Streichmassen wurden mit dem in der Tabelle 2a jeweils angegebenen Strichrezept mit einem Feststoffgehalt von 68 Gew.-% hergestellt, auf Glasfaserpapier mittels 30µm-Filmziehkastenrakel aufgetragen, was einer Strichdicke von ca.12 µm entsprach, und bei 100°C im Umlufttrockenschrank eine Minute lang getrocknet. Als Trägermaterial für die Streichmassen wurde bewusst neutrales Glasfaserpapier verwendet, um jeglichen Rohpapier-/Rohkartoneinfluß wie z.B. den eines optischen Aufhellers auf die Messergebnisse ausschließen zu können. An den so erhaltenen Strichmustern wurden die in der Papierindustrie üblichen Reflexionswerte Weißgrad R457 und CIE-Weißgrad gemessen. Die Rezepturen und die dazu gehörigen Messergebnisse sind in Tabelle 2a zusammengefasst.

**Tabelle 2a: Strichreflexionswerte**

| **Strichrezept** | **Angaben in Gewichtsteilen fest** | | |
|---|---|---|---|
| | Vergleich | + VAE | + VAE |
| Hydrocarb 90 | 80 | 80 | 80 |
| Camcoat 80 | 20 | 20 | 20 |
| Sterocoll FS | 0,13 | 0,13 | 0,13 |
| Primal P-308M | 14 | 10,5 | 7 |
| VAE-Dispersion | | 3,5 | 7 |
| Tinopal ABP-Z | 1 | 1 | 1 |

| **Prüfparameter** | **Reflexionswerte** | | |
|---|---|---|---|
| Weißgrad R 457 % | 92,3 | 96,2 | 98,3 |
| Erhöhung Weißgrad R 457 | | + 4,2 % | + 6,5 % |
| CIE-Weiße | 87,7 | 100,1 | 106,3 |
| Erhöhung CIE-Weiße | | + 14 % | + 21 % |

Die Striche mit steigendem Anteil der VAE-Dispersion zeigten gegenüber dem Vergleichsstrich nur mit dem Binder auf Basis Styrol-Acrylsäureester-Copolymer, einen signifikanten Anstieg in den praxisrelevanten Reflexionsparametern Weißgrad R457 und CIE-Weiße. In Prozenten ausgedrückt ist je nach Anteil VAE-Dispersion eine Steigerung bis zu 6,5 % in den Weißgrad-Werten bzw. bis zu 21 % bei den CIE-Werten erreichbar. Die Erhöhung in den Reflexionswerten ist auf den jeweiligen Anteil der VAE-Dispersion im Strich mit ihrem Schutzkolloidsystem auf Basis von Polyvinylalkohol zurückzuführen, welcher als Akzeptor für den optischen Aufheller wirkt.

Bestimmung der UV-Strichvergilbung von mit den erfindungsgemäß modifizierten Streichmassen hergestellten, mit einer Styrol-Butadien-Dispersion und VAE-Dispersion, gestrichenen Trägermaterialien:
Die Herstellung der gestrichenen Papiere erfolgte wie bei der Bestimmung der Strichreflexionswerte beschrieben. Als Trägermaterial für die Streichmassen wurde neutrales Glasfaserpapier verwendet, um jeglichen Rohpapier-/Rohkartoneinfluß wie z.B. den eines optischen Aufhellers auf die Messergebnisse ausschließen zu können.
Die Streichmassen enthielten bewusst keinen optischen Aufheller, da dieser die Aussage hinsichtlich der UV-Vergilbung der Striche verfälschen würde, da optische Aufheller aufgrund ihrer chemischen Konstitution unter UV-Licht zerfallen und dadurch die Striche zunächst stark vergilben und dann über die Zeit ausbleichen.
Gestrichene Papiere und Kartons welche für längeren Gebrauch bestimmt sind, wie zum Beispiel Kalender, Bilder, Poster oder Verpackungen und welche dem Tageslicht ausgesetzt sind, enthalten deshalb im Strich keine optischen Aufheller.
An den so erhaltenen Strichmustern wurde die Vergilbung gemessen, nachdem die Strichmuster über 27 Stunden einer UV-Lampe mit 351 nm Wellenlänge ausgesetzt waren, wobei 27 Stunden Bestrahlung in der Praxis etwa 20 Tage Tageslicht entsprechen (nach Herstellerangaben). Die Rezepturen und die dazu gehörigen Messergebnisse sind in Tabelle 3 zusammengefasst.

**Tabelle 3: Strichvergilbung**

| **Strichrezept** | | | **Gewichtsteile fest** | | |
|---|---|---|---|---|---|
| | | | Vergleich | + VAE | + VAE |
| Hydrocarb 90 | | | 80 | 80 | 80 |
| Camcoat 80 | | | 20 | 20 | 20 |
| Sterocoll FS | | | 0,13 | 0, 13 | 0, 13 |
| Litex P7110 | | | 14 | 10,5 | 7 |
| VAE-Dispersion | | | | | 7 |
| | | | | | |

| **Prüfparameter** | | | **Reflexionswerte** | | |
|---|---|---|---|---|---|
| Weißgrad R 457 | % | vor UV-Bestrahlung | 88,3 | 89,0 | 89,8 |
| Weißgrad R 457 | % | **nach** 20 Tagen UV-Bestrahlung | 85,0 | 87,0 | 88,1 |
| Weisseverlust | %-Punkte | | -3,3 | -2 | -1,7 |
| Gelbwert | | **vor** UV-Bestrahlung | 4,4 | 3,8 | 2,8 |
| Gelbwert | | **nach** 20 Tagen UV-Bestrahlung | 8,2 | 6,2 | 5 |
| Gelbwertverlust | %-Punkte | | 3,8 | 2,4 | 2,2 |

Die Striche ohne Aufheller zeigten mit der erfindungsgemäßen Kombination zunächst einen höheren Weißgrad als der Vergleichsstrich mit auschließlich Styrol-Butadien-Dispersion. Dieser Unterschied ist auch im Gelbwert deutlich erkennbar (je niedriger der Zahlenwert desto höher die Weisse). Somit ist auch nachgewiesen, dass durch den Einsatz der erfindungsgemäßen Kombination, auch ohne optischen Aufhelleranteil, im Strich bereits eine höhere Strichweisse erreicht wird. Die Striche mit steigendem Anteil an VAE-Dispersion in der erfindungsgemäßen Kombination zeigten gegenüber dem Vergleichsstrich mit dem Binder ausschließlich auf Basis Styrol-Butadien-Copolymer einen wesentlich niedrigeren Weißgradabfall über die Zeitdauer, sind also UV-Licht stabiler. Zieht man als Maßzahl für die Vergilbung den Gelbwert heran so ist auch hier der Unterschied im Weisseverlust bzw. in der Vergilbung deutlich erkennbar.

### Bestimmung des Farbwegschlags von gestrichenem Karton

Das Wegschlagen betrifft das Absorptionsvermögen eines gestrichenen Papiers bzw. Kartons gegenüber der Druckfarbe. Die Intensität der Absorption bestimmt die Zeit des Eindringens in den jeweiligen Strich. Für den Offsetdruck ist diese Eigenschaft sehr wichtig, da zu langsame Absorption Farbablegen im Stapel und auch einen Farbaufbau am Gummituch der Offsetdruckmaschine verursachen kann, was zu häufigen Stillständen der Druckmaschine wegen notwendiger Waschintervalle führen kann. Das Wegschlagverhalten eines gestrichenen Papiers oder Kartons wird mittels Probedruckgeräten ermittelt. Im Beispielsfall erfolgte dies mit der Prüfbau-Mehrzweckprobedruckmaschine. Dabei wurde ein Prüfstreifen des gestrichenen Papiers bzw. Kartons mit einer definierten Druckfarbenmenge bedruckt und anschließend in bestimmten Zeitintervallen - im Beispielsfall nach 15/30/60/120 Sekunden gegen ein normiertes, unbedrucktes Papier gekontert. Die Konterdrucke zeigen im Normalfall eine abnehmende Farbdichte wegen des Absorptionsprozesses und der Trocknung der Druckfarbe. Je kürzer die Zeit vom farbintensiven zum farblosen Konterabdruck ist, umso schneller ist das Farbwegschlagverhalten.
Das Farbwegschlagverhalten kann visuell bzw. numerisch mit der Farbdichtemessung beurteilt werden. Im Beispielsfall wurde die Farbdichtemessung gewählt.
Die Streichmassen wurden nach einem praxisüblichen Streichfarbenrezept, wie in der Tabelle dargestellt, im Labor mit einem Feststoffgehalt von 65 Gew.-% hergestellt, auf Chromoduplexkarton mittels 20µm-Drahtrakel aufgetragen und die so gestrichenen Kartons bei 100°C im Umlufttrockenschrank eine Minute getrocknet. Das Strichgewicht betrug ca. 20 g/m².
Die so gestrichenen Kartons wurden dem oben geschilderten Farbwegschlagtest unterzogen und die Konterdruckstreifen mittels Farbdichtemessung ausgewertet.

Die Rezepturen und die dazu gehörigen Messergebnisse sind in Tabelle 4 (Styrol-Butadien-Copolymer + VAE-Dispersion) bzw. Tabelle 4a (Styrol-Acrylsäureester-Copolymer + VAE-Dispersion) zusammengefasst.

**Tabelle 4: Farbwegschlag**

| **Strichrezept** | **Angaben in Gewichtsteilen fest** | | |
|---|---|---|---|
| | Vergleich | + VAE | + VAE |
| Hydrocarb 90 | 80 | 80 | 80 |
| Camcoat 80 | 20 | 20 | 20 |
| Sterocoll FS | 0,13 | 0,13 | 0,13 |
| Litex P7110 | 14 | 10,5 | 7 |
| VAE-Dispersion | 0 | 3,5 | 7 |
| Tinopal ABP-Z fl. | 1 | 1 | 1 |

| **Prüfparameter** | **Farbdichtewert** | | |
|---|---|---|---|
| Konter nach 15 s | 0,14 | 0,11 | 0,08 |
| Konter nach 30 s | 0,05 | 0,03 | 0,03 |
| Konter nach 60 s | 0,03 | 0,02 | 0,02 |
| Konter nach 120 s | 0,02 | 0,02 | 0,02 |

**Tabelle 4a: Farbwegschlag**

| **Strichrezept** | **Angaben in Gewichtsteilen fest** | | |
|---|---|---|---|
| | Vergleich | + VAE | + VAE |
| Hydrocarb 90 | 80 | 80 | 80 |
| Camcoat 80 | 20 | 20 | 20 |
| Sterocoll FS | 0,13 | 0,13 | 0,13 |
| Primal P-308M | 14 | 10,5 | 7 |
| VAE-Dispersion | 0 | 3,5 | 7 |
| Tinopal ABP-Z fl. | 1 | 1 | 1 |

| **Prüfparameter** | **Farbdichtewert** | | |
|---|---|---|---|
| Konter nach 15 s | 0,19 | 0,12 | 0,04 |
| Konter nach 30 s | 0,15 | 0,08 | 0,02 |
| Konter nach 60 s | 0,08 | 0,05 | 0,02 |
| Konter nach 120 s | 0,03 | 0,02 | 0,02 |

Die Farbdichtewerte nach 15 und 30 Sekunden zeigten ein eindeutig schnelleres Farbwegschlagverhalten der poröseren Striche mit der erfindungsgemäßen Kombination gegenüber den geschlosseneren Vergleichsstrichen mit den Bindern ausschließlich auf Basis Styrol-Butadien-Copolymer bzw. Styrol-Acrylsäureester-Copolymer, welche jeweils die Druckfarbenpenetration verlangsamen.

Neben den eben diskutierten Vorteilen haben die erfindungsgemäß zusammengesetzten Papierstreichmassen den Vorteil, dass sich der Einsatz von gelöstem Polyvinylalkohol-Granulat, welches erst aufwendig im Polyvinylalkoholkocher hergestellt werden muß, erübrigt, da der Polyvinylalkohol-Anteil über die mit Polyvinylalkohol stabilisierte VAE-Dispersion bereits eingebracht wird. Sollte der über die mit Polyvinylalkohol stabilisierte VAE-Dispersion in die Streichmasse eingebrachte Polyvinylalkoholanteil als Akzeptor nicht ausreichend sein, so muss wesentlich weniger vorher aufwendig gelöster Polyvinylalkohol zugesetzt werden, als in einer Streichmasse ohne die erfindungsgemäße VAE-Dispersion nötig wäre, was zusätzlich einen erheblichen ökonomischen Vorteil mit sich bringt.

## Patentansprüche

1. Papierstreichmassen enthaltend als Bindemittel eine wässrige Dispersion eines Styrol-Butadien-Copolymers oder eines Styrol-Acrylsäureester-Copolymers, oder ein Gemisch dieser wässrigen Dispersionen, **dadurch gekennzeichnet, dass** jeweils zusätzlich eine wässrige Dispersion eines mit Polyvinylalkohol stabilisierten Vinylacetat-Ethylen-Copolymers enthalten ist.

2. Papierstreichmassen nach Anspruch 1, **dadurch gekennzeichnet, dass** die wässrige Dispersion des Vinylacetat-Ethylen-Copolymers mit einem teilverseiftem Polyvinylalkohol stabilisiert ist.

3. Papierstreichmassen nach Anspruch 1, **dadurch gekennzeichnet, dass** die wässrige Dispersion des Vinylacetat-Ethylen-Copolymers mit einem teilverseiften Polyvinylalkohol mit einem Hydrolysegrad von 80 bis 95 Mol-% und einer Höpplerviskosität, in 4 %-iger wässriger Lösung von 4 bis 30 mPas (Methode nach Höppler bei 20°C, DIN 53015) stabilisiert ist.

4. Papierstreichmassen nach Anspruch 1, **dadurch gekennzeichnet, dass** die wässrige Dispersion des Vinylacetat-Ethylen-Copolymers als Vinylacetat-Ethylen-Copolymer ein oder mehrere aus der Gruppe umfassend Copolymere von Vinylacetat mit 1 bis 40 Gew.-% Ethylen, und Copolymere von Vinylacetat mit 1 bis 40 Gew.-% Ethylen und mit 1 bis 50 Gew.-% von einem oder mehreren weiteren Comonomeren aus der Gruppe Vinylester mit 3 bis 12 C-Atomen im Carbonsäurerest, und Copolymere von Vinylacetat mit 1 bis 40 Gew.-% Ethylen und mit 1 bis 50 Gew.-% (Meth)Acrylsäureester von unverzweigten oder verzweigten Alkoholen mit 1 bis 18 C-Atomen, enthält, wobei sich die Angaben in Gew.-% auf jeweils 100 Gew.-% aufaddieren.

5. Papierstreichmassen nach Anspruch 1 bis 4, **dadurch gekennzeichnet, dass** die Vinylacetat-Ethylen-Copolymer-Dispersion 1 bis 20 Gew.-% Polyvinylalkohol, bezogen auf Vinylacetat-Ethylen-Copolymer enthält.

6. Papierstreichmassen nach Anspruch 1 bis 5, **dadurch gekennzeichnet, dass** die Papierstreichmassen mindestens eine wässrige Dispersion eines Styrol-Butadien-Copolymers oder mindestens eine wässrige Dispersion eines Styrol-Acrylsäureester-Copolymers enthalten, oder ein Gemisch aus mindestens einer wässrigen Dispersion eines Styrol-Butadien-Copolymers und aus mindestens einer wässrigen Dispersion eines Styrol-Acrylsäureester-Copolymers enthalten, jeweils in Kombination mit mindestens einer wässrigen Dispersion eines mit Polyvinylalkohol stabilisierten Vinylacetat-Ethylen-Copolymers, in einem Gewichtsverhältnis der Styrol-haltigen Copolymeren zu dem Vinylacetat-Ethylen-Copolymeren von jeweils 50 : 50 bis 95 : 5 (fest/fest) enthälten.

7. Papierstreichmassen nach Anspruch 1 bis 6, **dadurch gekennzeichnet, dass** der Anteil an dem Gemisch aus wässriger Dispersion eines Styrol-Butadien-Copolymers und/oder eines Styrol-Acrylsäureester-Copolymers und einer wässriger Dispersion eines mit Polyvinylalkohol stabilisierten Vinylacetat-Ethylen-Copolymers jeweils 7 bis 20 Gewichtsteile (fest), bezogen auf 100 Gewichtsteile Pigment (fest), beträgt.

8. Verfahren zur Herstellung der Papierstreichmassen nach Anspruch 1 bis 7 mittels Vermischen des Pigmentanteils, des Bindemittelanteils, sowie gegebenenfalls weiterer Zusatzstoffe, und Wasser.

9. Verwendung der Papierstreichmassen nach Anspruch 1 bis 7 zur Herstellung von gestrichenen graphischen Papieren oder gestrichenen graphischen Kartons.

## Claims

1. Paper coating slips comprising as binder an aqueous dispersion of a styrene-butadiene copolymer or of a styrene-acrylic ester copolymer, or a mixture of these aqueous dispersions, **characterized in that** in each case additionally an aqueous dispersion of a vinyl acetate-ethylene copolymer stabilized with polyvinyl alcohol is comprised.

2. Paper coating slips according to Claim 1, **characterized in that** the aqueous dispersion of the vinyl acetate-ethylene copolymer is stabilized with a partially hydrolyzed polyvinyl alcohol.

3. Paper coating slips according to Claim 1, **characterized in that** the aqueous dispersion of the vinyl acetate-ethylene copolymer is stabilized with a partially hydrolyzed polyvinyl alcohol having a degree of hydrolysis of 80 to 95 mol% and a Höppler viscosity in 4% strength aqueous solution of 4 to 30 mPas (Höppler method at 20°C, DIN 53015).

4. Paper coating slips according to Claim 1, **characterized in that** the aqueous dispersion of the vinyl acetate-ethylene copolymer comprises as vinyl acetate-ethylene copolymer one or more from the group consisting of copolymers of vinyl acetate with 1% to 40% by weight of ethylene, and copolymers of vinyl acetate with 1% to 40% by weight of ethylene and with 1% to 50% by weight of one or more further comonomers from the group of vinyl esters having 3 to 12 C atoms in the carboxylic acid residue, and copolymers of vinyl acetate with 1% to 40% by weight of ethylene and with 1% to 50% by weight of (meth)acrylic esters of unbranched or branched alcohols having 1 to 18 C atoms, the figures in % by weight adding up to 100% by weight in each case.

5. Paper coating slips according to Claim 1 to 4, **characterized in that** the vinyl acetate-ethylene copolymer dispersion comprises 1% to 20% by weight of polyvinyl alcohol, based on vinyl acetate-ethylene copolymer.

6. Paper coating slips according to Claim 1 to 5, **characterized in that** the paper coating slips comprise at least one aqueous dispersion of a styrene-butadiene copolymer or at least one aqueous dispersion of a styrene-acrylic ester copolymer, or comprise a mixture of at least one aqueous dispersion of a styrene-butadiene copolymer and of at least one aqueous dispersion of a styrene-acrylic ester copolymer, in each case in combination with at least one aqueous dispersion of a vinyl acetate-ethylene copolymer stabilized with polyvinyl alcohol, in a weight ratio of the styrene-containing copolymers to the vinyl acetate-ethylene copolymer of in each case 50:50 to 95:5 (solid/solid).

7. Paper coating slips according to Claim 1 to 6, **characterized in that** the fraction of the mixture of aqueous dispersion of a styrene-butadiene copolymer and/or of a styrene-acrylic ester copolymer and of an aqueous dispersion of a vinyl acetate-ethylene copolymer stabilized with polyvinyl alcohol is in each case 7 to 20 parts by weight (solid), based on 100 parts by weight of pigment (solid).

8. Method for producing the paper coating slips according to Claim 1 to 7 by mixing the pigment fraction, the binder fraction, and also, optionally, further additives, and water.

9. Use of the paper coating slips according to Claim 1 to 7 for producing coated graphics papers or coated graphics cards.

## Revendications

1. Sauces de couchage pour papier, contenant en tant que liant une dispersion aqueuse d'un copolymère de styrène-butadiène ou d'un copolymère de styrène-ester de l'acide acrylique, ou un mélange de ces dispersions aqueuses, **caractérisées en ce qu'**une dispersion aqueuse d'un copolymère d'acétate de vinyle-éthylène stabilisée avec de l'alcool polyvinylique est à chaque fois également contenue.

2. Sauces de couchage pour papier selon la revendication 1, **caractérisées en ce que** la dispersion aqueuse du copolymère d'acétate de vinyle-éthylène est stabilisée avec un alcool polyvinylique partiellement saponifié.

3. Sauces de couchage pour papier selon la revendication 1, **caractérisées en ce que** la dispersion aqueuse du copolymère d'acétate de vinyle-éthylène est stabilisée avec un alcool polyvinylique partiellement saponifié ayant un degré d'hydrolyse de 80 à 95 % en moles et une viscosité de Hôppler dans une solution aqueuse à 4 % de 4 à 30 mPas (méthode selon Hôppler à 20 °C, DIN 53015).

4. Sauces de couchage pour papier selon la revendication 1, **caractérisées en ce que** la dispersion aqueuse du copolymère d'acétate de vinyle-éthylène contient en tant que copolymère d'acétate de vinyle-éthylène un ou plusieurs du groupe comprenant les copolymères d'acétate de vinyle avec 1 à 40 % en poids d'éthylène, et les copolymères d'acétate de vinyle avec 1 à 40 % en poids d'éthylène et 1 à 50 % en poids d'un ou de plusieurs comonomères supplémentaires du groupe constitué par les esters de vinyle contenant 3 à 12 atomes C dans le radical acide carboxylique, et les copolymères d'acétate de vinyle avec 1 à 40 % en poids d'éthylène et 1 à 50 % en poids d'esters de l'acide (méth)acrylique d'alcools non ramifiés ou ramifiés contenant 1 à 18 atomes C, les proportions en % en poids s'ajoutant à chaque fois pour atteindre 100 % en poids.

5. Sauces de couchage pour papier selon les revendications 1 à 4, **caractérisées en ce que** la dispersion de copolymère d'acétate de vinyle-éthylène contient 1 à 20 % en poids d'alcool polyvinylique, par rapport au copolymère d'acétate de vinyle-éthylène.

6. Sauces de couchage pour papier selon les revendications 1 à 5, **caractérisées en ce que** les sauces de couchage pour papier contiennent au moins une dispersion aqueuse d'un copolymère de styrène-butadiène ou au moins une dispersion aqueuse d'un copolymère de styrène-ester de l'acide acrylique, ou un mélange d'au moins une dispersion aqueuse d'un copolymère de styrène-butadiène et d'au moins une dispersion aqueuse d'un copolymère de styrène-ester de l'acide acrylique, à chaque fois en combinaison avec au moins une dispersion aqueuse d'un copolymère d'acétate de vinyle-éthylène stabilisé avec de l'alcool polyvinylique, en un rapport en poids entre les copolymères contenant du styrène et les copolymères d'acétate de vinyle-éthylène à chaque fois de 50:50 à 95:5 (solide/solide).

7. Sauces de couchage pour papier selon les revendications 1 à 6, **caractérisées en ce que** la proportion du mélange d'une dispersion aqueuse d'un copolymère de styrène-butadiène et/ou d'un copolymère de styrène-ester de l'acide acrylique et d'une dispersion aqueuse d'un copolymère d'acétate de vinyle-éthylène stabilisé avec de l'alcool polyvinylique est à chaque fois de 7 à 20 parties en poids (solide), par rapport à 100 parties en poids de pigment (solide).

8. Procédé de fabrication des sauces de couchage pour papier selon les revendications 1 à 7 par mélange de la fraction de pigment, de la fraction de liant, ainsi qu'éventuellement d'additifs supplémentaires, et d'eau.

9. Utilisation des sauces de couchage pour papier selon les revendications 1 à 7 pour la fabrication de papiers graphiques revêtus ou de cartons graphiques revêtus.
